# EUROPEAN PATENT SPECIFICATION

(11) **EP 3 307 615 B1**
(45) Date of publication and mention of the grant of the patent: **15.04.2020**
(21) Application number: 16732989.5
(22) Date of filing: 14.06.2016
(51) Int. Cl.: B63B 35/03, F16L 1/20, F16L 1/23

(54) **FLEXIBLE CABLE DELIVERY SYSTEM FOR TWO SIDED CABLE LAYING**
FLEXIBLES KABELEINFÜHRUNGSSYSTEM ZUR ZWEISEITIGEN KABELVERLEGUNG
SYSTÈME DE DISTRIBUTION DE CÂBLE FLEXIBLE POUR POSE DE CÂBLES À DEUX FACES

(30) Priority: 15.06.2015 NL 2014967
(43) Date of publication of application: 18.04.2018
(73) Proprietor: IHC Holland IE B.V., 3361 EP Sliedrecht (NL)
(72) Inventor: VAN BURGEL, Bart-Jan, 3061 GM Rotterdam (NL); VAN LEEUWEN, Henk Jan, 3271 BM Mijnsheerenland (NL)
(74) Representative: Nederlandsch Octrooibureau
(86) International application number: PCT/EP2016/063654
(87) International publication number: WO 2016/202809

(56) References cited:
- EP-A1- 0 919 458
- WO-A1-2013/102527
- US-A1- 2014 133 919

## Description

### BACKGROUND

When laying out flexible products, such as cables, pipe, umbilicals, etc., in a water body, for example on a sea bed, a quadrant is typically used to ensure that the cable maintains structural and functional integrity by complying with its particular bend radius restrictions. This quadrant is deployed from a vessel, typically using a crane, winch or A-frame on the deck of the vessel.

When laying cable from one structure to another, the cable to be used is typically payed out from a cable storage. Connecting the first end to a structure is rather straight forward, while for the second end additional length is needed to manipulate the cable into the offshore structure entrance located at the seabed and then bringing the cable to the topside for electrical connection. The quadrant can be used to control and handle the overlength which is typically laid out on deck after being cut to the length needed, functioning as a cable holder and used in helping to pull-in the cable in a second offshore structure, often referred to as the "second end pull-in."

In conventional deployment of a quadrant, the quadrant is placed offline, meaning the cable is not going around the quadrant while laying cable from one offshore structure to another. At a second end, the quadrant needs to be brought inline by manipulating the heavy cable around the quadrant. At the same time, the weight of the cable that hangs overboard exerts a pulling force. This way of deploying the quadrant is therefore labour intensive, time consuming and a high-risk operation.

When using an inline quadrant, meaning the cable is already strung around the quadrant at the start of the lay operation, options in choosing vessel heading are typically limited to either port or starboard side by the inline quadrant and a cable highway going from a cable storage area (which can include reel(s), carousel(s), etc.) to the inline quadrant. The cable is fed around the quadrant through the cable highway which leads only to the portside or the starboard side of the quadrant and then to a tension drive on either the portside or the starboard side of the vessel. Feeding the quadrant on the starboard side results in laying the first cable end through a portside tension drive and over the portside section of the stern, and conversely, feeding the portside results in laying the first cable end through a starboard side tension drive and over the starboard section of the stern. Because the feeding of the cable to the quadrant is from only one side and there is typically a tension drive on only one side, there is no flexibility for laying cable over the other side of the vessel in typical systems.

Depending on weather and ocean conditions, this can result in non-optimal conditions for performance and risk. Inter-array cable installation is strongly impacted by the magnitude and direction of disturbances like waves, wind and current. Performance and capabilities of the vessel strongly depend on the angle with the disturbances, and therefore the ability to feed cable to the quadrant from only one side can negatively impact the ability to position the vessel for optimal performance under different conditions. Additionally, the lack of flexibility in choosing the vessel heading due to the limitations of feeding the quadrant on only one side can result in higher risks due to unpredictable disturbances with a strong relating to heading, for example, waves causing vessel motions, wind blowing the vessel in certain directions, and current forcing submersed objects (such as the quadrant) in a certain direction. As a result, in some cases, operations are slowed down, have to be aborted or cannot be started at all.

A method of laying underwater cable is known from EP0919458A1 that relates to improvements in loading and laying underwater cable. EP0919458A1 provides a method of loading underwater cable onto a vessel. The method requires (a) providing a coil of cable in a cable transfer vessels; and (b) floating the transfer vessel onboard the cable laying vessel. EP0919458A1 lays the cable in a straight line from the coil through cable lines into the water. No cable laying quadrants, in short quadrants, are employed.

### SUMMARY

A system for laying flexible product from a storage area below a deck of a vessel includes an inline quadrant above the deck for guiding flexible product to a portside or starboard side of the vessel. The flexible product can enter the inline quadrant on portside or on starboard side. The system further includes a highway with a highway portside guide and a highway starboard side guide for guiding the flexible product from a below deck position to an above deck position on either the portside or the starboard side; and a smart spooling system to guide flexible product between the storage area and to either the portside guide or the starboard side guide of the highway. The highway extends to the portside entrance and the starboard side entrance of the inline quadrant. The flexible product can be, for example, cable, pipe, umbilical, etc.

Such a system allows for a flexible storage system and for the laying of a flexible product from either side of a vessel through the use of a smart spooling system which is able to guide the flexible product from a below deck position to either side entrance of the inline quadrant. The smart spooling system is able to work with a number of different storage devices (including but not limited to reels, carousels and turntables) to guide the flexible product to either highway portside guide or highway starboard side guide leading to a desired entrance side of inline quadrant while accommodating for flexible product and storage device requirements, including fleet angle, bending restrictions, etc. By allowing flexibility for storage and for laying flexible product from either portside or starboard side of a vessel, the system allows for more flexibility in starting and/or continuing operations. Different sea states and/or environmental conditions can be considered, and vessel can lay cable and/or approach structures in a way that optimizes performance and minimizes risk under current conditions.

In one example, the smart spooling system comprises a lower bend for guiding the flexible product to and from the storage area; a lower bend drive system for tilting and/or moving the lower bend with respect to the vessel; and a guide for guiding the flexible product between the lower bend to either the starboard side entrance or the portside entrance of the highway. The lower bend is able to tilt and/or move laterally with respect to the vessel, which can allow for accommodating fleet angle of the flexible product coming from the storage device, and proper alignment between the lower bend and the guide. Optionally, the smart spooling system could have more than one guide, with one on a starboard side and one on a portside.

In one example, the system further comprises a lower bend drive system for tilting and/or moving the lower bend. The lower bend drive system can help with ensuring proper positioning of the lower bend to properly guide flexible product through smart spooling system and highway while accommodating for flexible product requirements.

In one example, the guide comprises one or more upper ducts. Such one or more upper ducts can provide a simple guide for guiding flexible product to one of the highway guides leading above deck and to a desired entrance of inline quadrant.

In one example, the guide comprises one or more upper bends; a fixed roller track; and/or one or more chutes. In such systems, the guide can be passively aligned, resulting in a low friction system that does not have to coordinate multiple drives in the smart spooling system. Additionally, the use of a fixed roller track can guide the flexible product with very low friction. The use of chutes can result on no torsion on the cable.

In one example, the lower bend and/or the guide comprises one or more rollers. Such rollers can provide for low-friction travel of the flexible product through the smart spooling system and can prevent torsion on the flexible product.

In one example, the lower bend drive system comprises a track for the lower bend to move laterally between the starboard side and the portside of the vessel. This can allow for proper alignment to work with a variety of different storage systems and properly control the fleet angle.

In one example, the smart spooling system further comprises a guide drive system for tilting and/or moving the guide with respect to the vessel for alignment with the lower bend and with the portside guide or starboard side guide of the highway. Such a drive system can ensure proper alignment and positioning of guide, as well as ensure that the guide stays in position throughout operations. This can ensure that flexible product is delivered to a desired side of the inline quadrant above deck while ensuring flexible product requirements are met. Optionally, the guide drive system could be able to move the guide laterally between the starboard side and the portside of the vessel to help with alignment and accommodate bending restrictions of the flexible product and control the fleet angle. Other embodiments, could include a guide on each of the starboard side and portside of the vessel, and in some embodiments each guide could have a separate drive system.

In one example, the system further comprises an aligning system extending between the guide and the lower bend for proper alignment between the guide and the lower bend. This can help guide the flexible product properly through the smart spooling system between the lower bend and the guide, and can be especially useful in a passively driven system.

According to the invention, the smart spooling system comprises a loading arm for receiving the flexible product from the storage system and directing it to the highway running below the storage system; and a vertical bend for directing the flexible product from the highway running below the storage system to either the portside guide or the starboard side guide of the highway. Optionally, the loading arm can be movable in a vertical direction and/or pivotable. Such a system can be especially useful where the storage system includes one or more turntables and/or carousels, as the loading arm can help in properly directing flexible product from the turntables and/or carousels and to the highway and smart spooling system.

In one example, the highway extends on both a starboard side and a portside of the vessel below the deck, and the system comprises one or more entrances to each of the starboard side and the portside highways. The smart spooling system comprises a horizontal bend to redirect the flexible product toward the highway portside guide or the highway starboard side guide. Optionally, the system further comprises a drive to drive the flexible product from the storage system to the highway toward the horizontal bend. The horizontal bend and the optional ability to drive the flexible product with the drive gives more flexibility for flexible product storage while allowing for delivering the flexible product above deck and to a desired entrance of the inline quadrant while accommodating flexible product requirements.

According to an embodiment, the storage system comprises at least one turntable or carousel. By having a storage system and smart spooling system that can work with turntables, carousels and/or reels, a variety of storage options for flexible products are available, giving more flexibility for requirements and/or restrictions related to specific operations, flexible product used, storage space and location, vessel, etc.

According to an embodiment, the system further comprises a portside tensioner on the vessel and a starboard side tensioner on the vessel. The inline quadrant guides the flexible product to either the portside tensioner or the starboard side tensioner. This allows for a very flexible system which is able to lay flexible product from either the portside or the starboard side of the vessel, allowing for more flexibility to start and approach operations from a desired side to minimize risk depending on current conditions.

According to another aspect of the invention, the method for laying flexible product from a vessel with a deck and a storage device below the deck using the laying system of the invention, the method comprising: a) aligning a smart spooling system with the storage device and/or based on a desired feed side of an inline quadrant on the deck; and b) extending a flexible product from the storage device through the smart spooling system through a guide to a desired entrance of the inline quadrant on the deck. Such a method allows for flexibility in flexible product storage in a vessel and flexibility of operations, as the flexible product is able to extend to either entrance of the inline quadrant and can therefore be laid from either side of the vessel. This allows for operations to be planned and executed to maximize effectiveness and minimize risk depending on prevailing sea, environmental and other conditions.

According to an embodiment, step a) comprises aligning a lower bend with the storage device and/or based on a desired feed side of an inline quadrant on the deck; and step b) comprises extending a flexible product from the storage device through the lower bend, through a guide around to a desired entrance of the inline quadrant. Optionally, step a) further comprises aligning the guide based on the desired feed side of the inline quadrant and/or the alignment of the lower bend; and/or comprises moving the guide laterally between the portside and starboard side of the vessel and/or tilting the guide. Further optionally, step b) comprises moving the lower bend laterally between the portside and starboard side of the vessel and/or tilting the lower bend. The ability to move and/or tilt lower bend and/or guide allows for guiding flexible product from a number of flexible storage options to a desired entrance of the inline quadrant above deck while accommodating for flexible product restrictions and requirements.

According to the invention, step a) comprises moving a loading arm to align with the storage device and/or based on a desired feed side of a highway leading to an inline quadrant on the deck. Such a loading arm can allow for use of different storage devices, such as a carousel or turntable, and can help to guide flexible product from the various storage devices. In some embodiments, the loading arm can help drive the flexible product and/or ensure tension is kept on the flexible product.

In one example, step a) comprises pivoting a bend to align with a portside or starboard side guide. By allowing for pivoting, a single bend could be used and could properly align and guide flexible product to a desired highway guide and a desired entrance of the inline quadrant.

According to an embodiment, step b) comprises extending a flexible product from a carousel, a turntable, and/or a reel through the smart spooling system through a guide to a desired entrance of the inline quadrant on the deck. The smart spooling system allows for the use of a number of different storage devices, providing a more flexible system.

In one example, the method further comprises extending the flexible product to a desired tensioner on the portside or the starboard side of the vessel. Having a tensioner on both the starboard side and the portside of the vessel and allowing for the extension to either tensioner allows for laying flexible product from either side of the vessel, providing a more flexible system that is able to start and continue operations and minimize risk in a number of different conditions.

### BRIEF DESCRIPTION OF THE DRAWINGS

Fig. 1 is a schematic view of an operation connecting two offshore structures with a cable.
Fig. 2a is cross-sectional side view of a vessel with a system for laying cable from a vessel.
Fig. 2b is a top view of the vessel of Fig. 2a.
Fig. 3a is a schematic side view of a smart spooling system.
Fig. 3b is a schematic front view of the smart spooling system of Fig. 3a.
Fig. 4 is a schematic front view of a second embodiment of a smart spooling system.
Fig. 5 is a schematic front view of a third embodiment of a smart spooling system.
Fig. 6 is a schematic front view of a fourth embodiment of a smart spooling system.
Fig. 7 is a schematic front view of a fifth embodiment of a smart spooling system.
Fig. 8a is a schematic side view of an embodiment of a cable laying and storage system which uses carousels and a horizontal reversing system.
Fig. 8b is a schematic top view of the cable laying and storage system of Fig. 8a.
Fig. 9a is a schematic side view of an embodiment of a cable laying and storage system which uses carousels and a vertical reversing system.
Fig. 9b is a schematic top view of the cable laying and storage system of Fig. 9a.
Fig. 10a is a schematic side view of an embodiment of a cable laying and storage system which uses turntables and a horizontal reversing system.
Fig. 10b is a schematic top view of the cable laying and storage system of Fig. 10a.
Fig. 11a is a schematic side view of an embodiment of a cable laying and storage system which uses turntables and a vertical reversing system.
Fig. 11b is a schematic top view of the cable laying and storage system of Fig. 11a.

### DETAILED DESCRIPTION

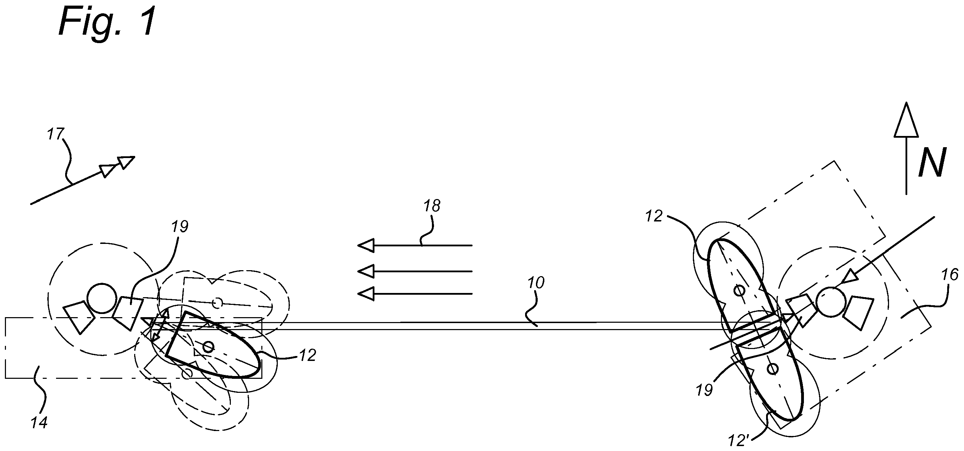

Fig. 1 is a schematic view of an operation connecting two offshore structures A, B through a power cable 10. Fig. 1 further includes vessel 12 (and prior art vessel 12'), float-on risk area 14, blow-on risk area 16, wind arrows 17, current indication arrows 18, J-tubes 19 and north directional arrow N. Directional arrow N, wind arrows 17 and current indication arrows 18 are indicated only for example and explanation purposes. J-tubes 19 are openings in offshore structures A, B through which cable enters the offshore structure.

The operation shown in Fig. 1 involves vessel 12 sailing from structure A to structure B to layout cable 10. Vessel 12 is laying the first end of the cable over portside. As can be seen from the current indication arrows 18, current is flowing in a westward direction from B to A. Wind arrows 17 show the wind blowing in a north-eastern direction. A float-on risk area 14 is depicted directly south from structure A and a blow-on risk area 16 is depicted to the north-west of structure B. Float-on risk area 14 is an area near structure A representing where vessel 12 is more likely to float towards structure A due to current at the time. Blow-on risk area 16 is an area near structure B where vessel 12 is more likely to be blown towards structure B due to wind conditions. Float-on risk area 14 and blow-off risk area 16 are shown as representative areas to give example indications of where vessel 12 is either prone to float-on or being blown towards structures A and B, and the exact locations, sizes, etc. would change according to conditions (e.g, direction and strength of wind, waves and currents).

As cable 10 connects to structures A and B through J-tubes 19, vessel 12 must approach each of structures at these respective points. Vessel 12' is a past vessel which is only able to lay-out cable from the starboardside. As can be seen, this results in vessel 12' having to approach J-tube 19 of structure B in blow-on risk area 16 overlapping with offshore structure B, making it more difficult for vessel 12' to maintain an ideal position with respect to J-tube 19 and therefore more dangerous.

Vessel 12 includes a cable laying system according to an embodiment of the current invention, with a cable highway that is able to feed an inline quadrant from either a portside entrance or a starboard side entrance, allowing for cable laying from either side of vessel 12. Thus, vessel 12 can position itself in a less risky position adjacent to structure B, in this case outside of the blow-on risk area 16. By allowing for laying cable 10 with a cable highway and an inline quadrant which can be fed from either a portside or starboard side entrance, vessel 12 is able to adapt to current conditions, allowing for less risky operations in a variety of conditions. Additionally, this ability can allow for operations in conditions where it was not possible to perform operation with past vessels 12' which were only able to lay cable from one side.

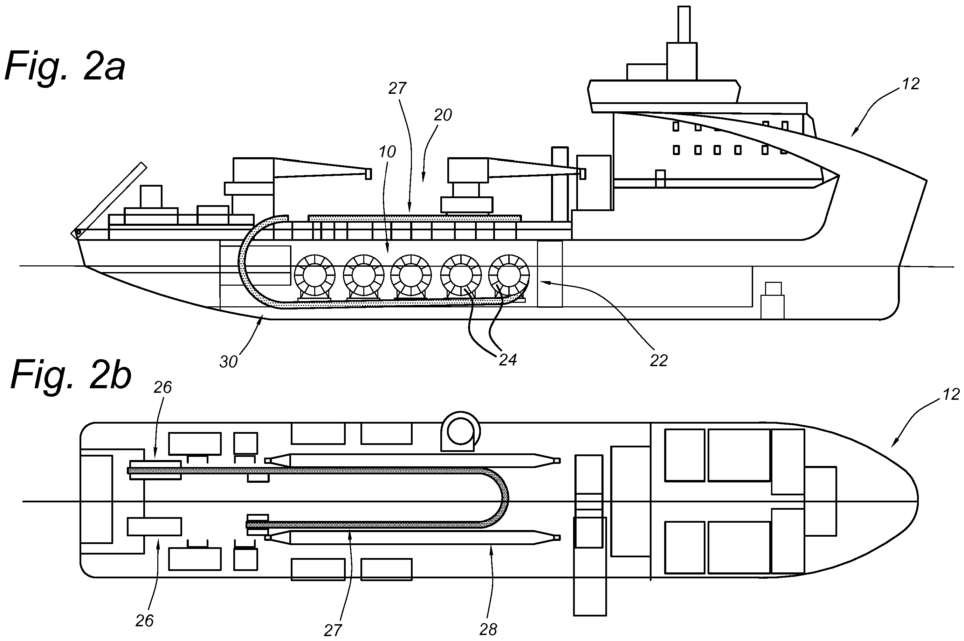

Fig. 2a is cross-sectional side view of vessel 12 with a system 20 for laying cable 10 from cable storage area 22 with reels 24, and Fig. 2b shows a top view of deck 13 of vessel 12. Conversely, system 20 can be used for pulling in cable 10. System 20 includes portside and starboard side tensioners 26, cable highway 27, inline quadrant 28 and smart spooling system 30.

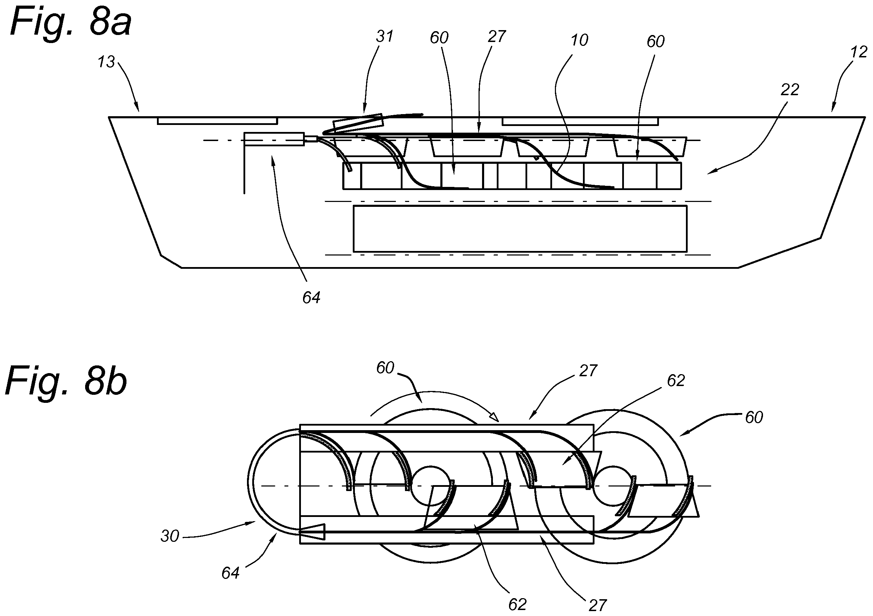

Cable storage area 22 can be a flexible product storage area with at least one reel 24 located below deck 13 of vessel 12. In this case, five reels 24 are shown, though other systems could have more or fewer. In some embodiments, one or more carousels and/or turntables could be used. Such alternative cable storage arrangements will be discussed in more detail in relation to Figs. 8a-11b.

As can be seen, cable 10 extends from cable storage area 22 through smart spooling system 30 which guides cable 10 to and from deck 13, where it extends on cable highway 27 to and around inline quadrant 28 and finally to a desired portside or starboard side tensioner 26. The track of cable highway 27 between smart spooling system 30 and inline quadrant 28 can be, for example, 50 meters.

In this embodiment, cable is fed to cable highway 27 through starboard guide 31 to inline quadrant 28 at starboard side entrance, resulting in laying the cable end over portside and using portside tensioner 26. Alternatively, smart spooling system 30 is able to guide cable from cable storage area 22 to cable highway 27 through portside guide 29 to inline quadrant 28 on the portside entrance, which would result in the use of starboard side tensioner 26. This enables cable laying from either side of vessel 12, ensuring that vessel 12 is adaptable to better perform operations with less risk under a variety of environmental and water conditions.

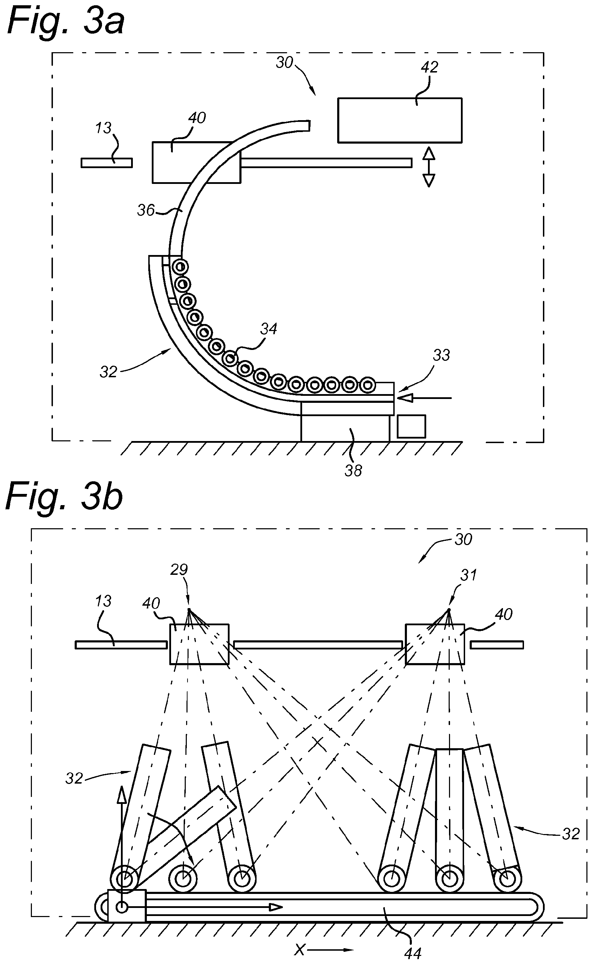

Fig. 3a is a schematic side view of smart spooling system 30, and Fig. 3b is a schematic front view of smart spooling system 30. Smart spooling system 30 includes lower bend 32 with cable entrance 33 and rollers 34, guide 36, lower bend drive system 38, guide drive 40, tensioner 42 and lateral movement track 44. Also shown in Figs. 3a-3b are portside guide 29 and starboard side guide 31 of cable highway 27 and deck 13. In this embodiment, guide 36 comprises two upper ducts 36. One upper duct 36 extends toward starboard side guide 29 of cable highway 27 leading to starboard entrance of inline quadrant 28, and one upper duct 36 extends toward portside guide 31 of cable highway 27 leading to portside entrance of inline quadrant 28 located on deck 13 of vessel 12. Portside guide 29 and starboard side guide 31 of cable highway 27 guide cable 10 from below deck 13 to above deck 13 on cable highway 27. The desired guide 29, 31 is used based on the desired entrance side of inline quadrant 28. In other embodiments, guide 36 could be only one or more than two upper ducts 36. Lower bend drive 38 and/or guide drive 40 can be, for example, a linear drive.

Lower bend drive 38 drives lateral and/or tilting movement of lower bend 32 to align with a reel 24 or other cable storage device, controlling the fleet angle between cable 10 and the reel 24 (not shown in Figs. 3a-3b). Guide drive 40 acts to drive cable 10 through smart spooling system 30 while maintaining tension on cable 10. The alignment ensures that cable 10 can be guided to a desired guide 29, 31 of cable highway 27 leading to the desired entrance of inline quadrant 28 while maintaining proper bending restriction requirements of cable 10 and maintaining tension on cable 10.

Cable 10 extends through smart spool system 30 from cable storage area 22 through cable entrance 33, through lower bend 32 and guide 36, on cable highway 27 to a desired entrance of inline quadrant 28, around inline quadrant 28 and finally to a desired one of the tensioners 26.

As shown in Fig. 3b, lower bend 32 is able to move laterally between the portside and starboard side of vessel 12 on track 44, and in some embodiments is also able to tilt, with movement driven by lower bend drive 38. Optionally, the tilting movements can be not actively driven, but controlled by the movements of the cable stretching to the desired guide 29, 31 of the cable highway 27 and entrance of the inline quadrant 28. Many different positions of lower bend 32 are shown in Fig. 3b to demonstrate different possible locations and alignment positions.

Similarly, upper ducts 36 are able to tilt for proper alignment with lower bend 32. In some embodiments, guide 36 may be able to move laterally between the portside and starboard side of vessel 12 and/or tilt, with movements either passively driven by cable and/or actively driven by a drive. These movements allow smart spool system 30 to properly align with any reel 24 or another cable storage device in the cable storage area 22, and to guide cable 10 from cable storage area 22 below deck 13 to a desired guide 29, 31 of cable highway 27 and then to a desired entrance of inline quadrant 28 on deck 13 while controlling for proper rope requirements, such as bending radius restrictions. The movement laterally on track 44 of lower bend 32 allows for proper alignment with a desired reel 24 (or other cable storage device) to control the fleet angle. The two upper ducts 36 allow for proper alignment with the desired guide 29 or 31 of cable highway 27 leading above deck 13, and then to inline quadrant 28. The tilting ensures proper alignment between lower bend 32 and guide 36.

By using a smart spooling system 30 which is able to feed cable highway 27 portside guide 29 or starboard side guide 31 leading to a desired entrance of inline quadrant 28, vessel 12 is able to accommodate cable laying or picking up from either side of vessel 12, allowing freedom to select how to approach offshore operations and structures for optimal performance and minimal risk based on current conditions. Smart spooling system 30 allows for flexible approaches in cable storage and in the laying out or picking up of cable 10, thereby providing a more flexible cable laying system 20 for vessel 12 which can operate effectively and minimize risk in a variety of operations and environmental conditions.

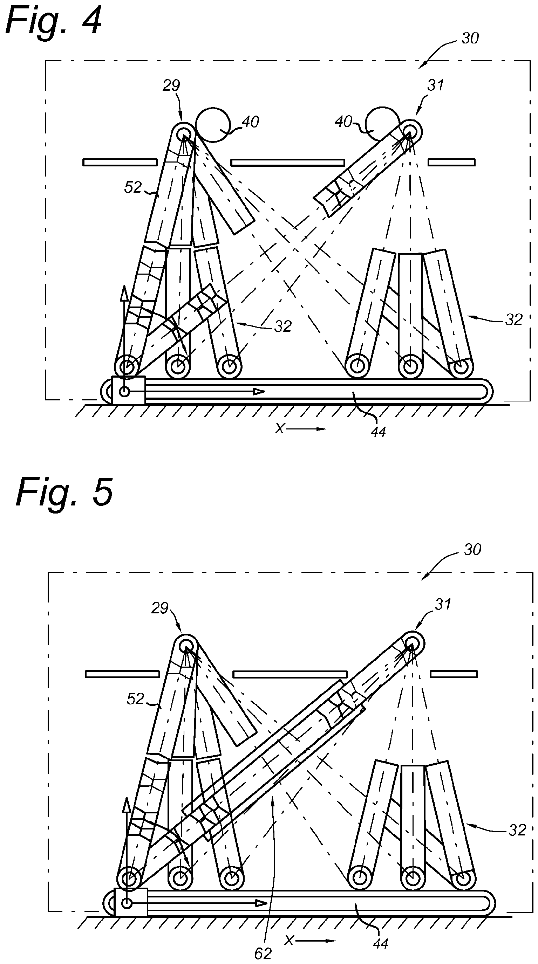

Figs. 4-7 are schematic front views of different embodiments of a smart spooling system 30. Similar components are labelled similarly to smart spooling system of Figs. 3a-3b. Smart spooling systems 30 each include lower bend 32, guide 36, lower bend drive system 38, and lateral movement track 44.

In the embodiment of Fig. 4, guide 36 comprises two upper bends 52, one located at the portside guide 29 of cable highway 27 and one located at the starboard side guide 31 of cable highway 27. Each upper bend 52 has a guide drive 40. Lower bend 32 is able to move laterally between portside and starboard side of vessel 12, driven by lower bend drive system 38. Upper bends 52 are able to tilt for proper alignment with lower bend 32. This tilting movement can be passively driven or actively driven.

Smart spooling system 30 works in much of the same manner as smart spooling system 30 of Figs. 3a-3b. Cable 10 enters smart spooling system at entrance 33 from cable storage area 22 (not shown), with lower bend 32 moving laterally to properly control the fleet angle of cable 10 from cable storage area 22. Either the portside or starboard side upper bend 52 is used according to which is the desired guide 29, 31 of cable highway 27 based on the desired feeding side of inline quadrant 28. Each of upper bend 52 and lower bend 32 are tilted for alignment with each other to guide cable 10 between cable storage area 22 below deck 13, to guide 29 or 31 of cable highway 27 and inline quadrant 28 above deck 13.

The cable can be guided by rollers 34, of lower bend 32 and in some embodiments upper bend 52 can also have rollers. Such rollers can ensure low-friction travel of the cable through smart spooling system 30 and can prevent torsion on cable 10.

Fig. 5 shows an embodiment of smart spooling system 30 similar to that shown in Fig. 4, with the exception that guide 36 of smart spooling system does not have its own drive, and includes an alignment extension 62. Only lower bend 32 is driven to laterally move and/or tilt. Guide 36 is passively aligned through cable 10 and alignment extension 62, resulting in a low friction system that prevents torsion on the cable and does not have to coordinate multiple drives in the smart spooling system 30.

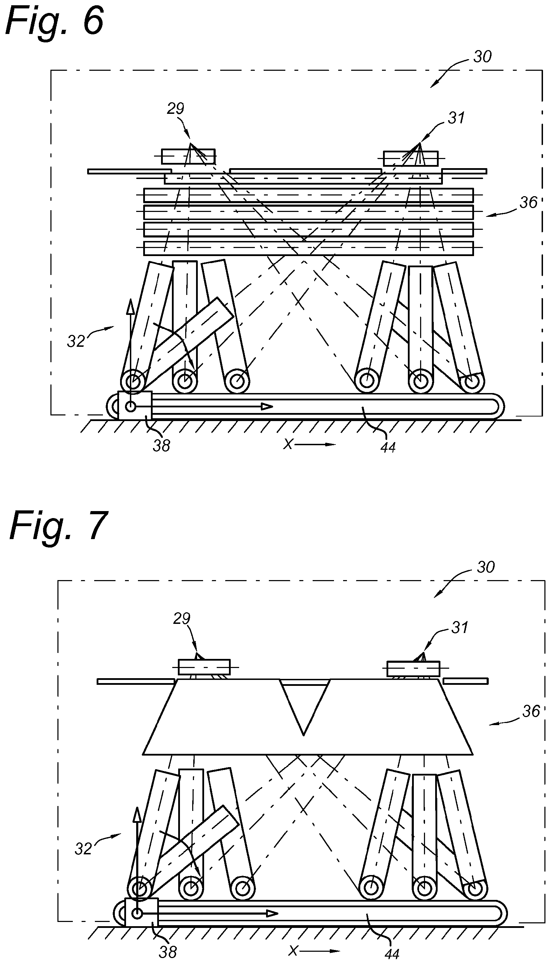

Fig. 6 shows an embodiment where guide 36 comprises a fixed roller track which can guide cable to cable highway 27 portside guide 29 or starboard side guide 31 to feed inline quadrant 28 from either portside entrance or starboard side entrance. As in the embodiments shown in Figs. 3a-5, lower bend 32 is driven for lateral and/or tilting movements by drive 38. Cable 10 is then guided by the fixed roller track to the desired cable highway 27 guide 29, 31 leading to the desired side of inline quadrant 28.

Fig. 7 shows an embodiment in which guide 36 comprises one or more chutes which can guide the cable 10 from lower bend 32 to either portside guide 29 or starboard side guide 31 of cable highway 27 and then to the desired entrance of inline quadrant 28.

In the embodiments of smart spooling system 30 shown in Figs. 6-7, smart spooling systems 30 and specifically guides 36 are able to guide cable from lower bend 32 to a desired guide 29, 31 of cable highway 27 and entrance of inline quadrant 28 with a simple design and only one drive system 38. The embodiment shown in Fig. 6 can also do this with very low friction due to rollers used in guide 36, and the chutes of Fig. 7 can do this without torsion on the cable.

Fig. 8a shows a schematic side view of an embodiment of cable laying system 20 which uses carousels 60 for cable storage system 22 and a horizontal reversing system. Fig. 8b shows a schematic top view of the cable laying system 20 and storage system 22 of Fig. 8a. Figs. 8a-8b include vessel 12 with deck 13, cable highway 27 (with portside guide 29 and starboard side guide 31), carousels 60, and smart spooling system 30, which includes carousel guide chutes 62 and horizontal bend 64. Carousels 60 hold cable 10 around a spindle, and spend cable out through the top of the carousel 60.

Cable highway 27 extends on both starboard side and portside of vessel 12 below deck 13 to horizontal bend 64 and then above deck 13 through either portside guide 29 or starboard side guide 31 to portside or starboard side entrance of inline quadrant 28. Carousel guide chutes 62 are located at a number of different locations depending on the number of carousels 60 used, and are able to guide cable 10 from any of carousels 60 to either a portside entrance to cable highway 27 or a starboard side entrance to cable highway 27 while controlling the fleet angle. Cable 10 then goes around horizontal bend 64 according to which side of cable highway 27 it entered and exits the opposite side. From horizontal bend 64, cable 10 is redirected in the other direction on vessel 12 (typically redirected to the front of vessel 12, but could be the back), where it travels above deck 13 through one of cable highway 27 guides 29 or 31. Once above deck, cable 10 travels on cable highway 27 to a desired entrance (starboard or portside) of inline quadrant 28 and then the desired tensioner 26 in the same manner described in relation to Figs. 2a-2b (though above deck components are not shown in Figs. 8a-8b). Carousel guide chutes 62 and/or cable highway guides 29, 31 may be tiltable (and in some cases movable) to ensure that cable requirements are met (bending radius restrictions, etc.).

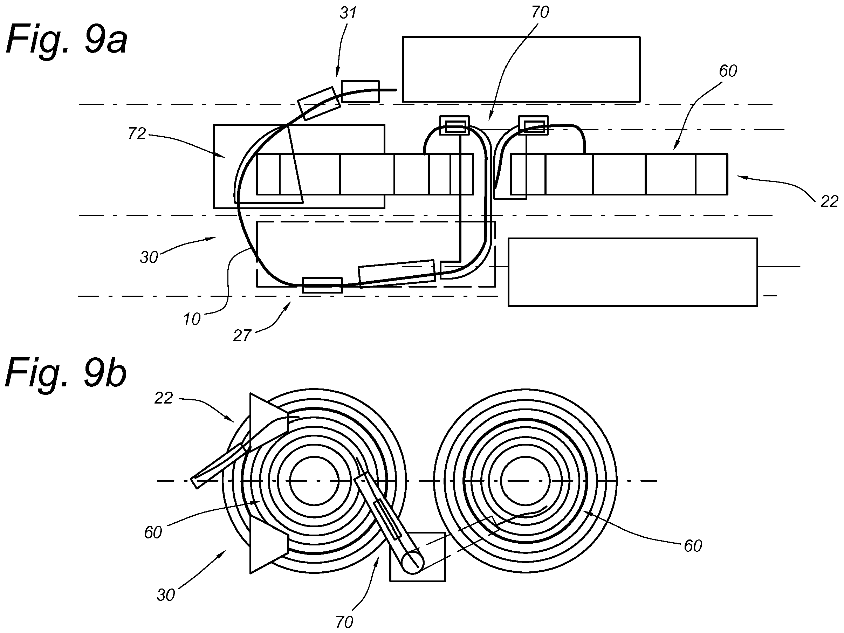

Fig. 9a shows a schematic side view of an embodiment of a cable laying system 20 which uses carousels 60 for cable storage system 22 and uses a vertical reversing system. Fig. 9b shows a top view of the system of Fig. 9a. Figs. 9a-9b include cable highway 27 with portside guide 29 and starboard side guide 31, carousels 60, and smart spooling system 30, which includes loading arm 70 and vertical bend 72.

As in Figs. 8a-8b, cable storage area includes a plurality of carousels 60. In this embodiment, cable 10 is pulled from carousels 60 using loading arm 70. Loading arm 70 is able to pivot to receive cable 10 from any of carousels 60 and is aligned to an angle of spending out from the carousel 60. In some embodiments there could be more than one loading arm 70. Loading arm 70 can also include a drive and/or tensioner to drive cable 10 with respect to carousel 60 and to maintain tension on cable 10 while maintaining proper fleet angle. In some embodiments, an additional guide could be used to direct cable 10 from the carousel to loading arm 70 and/or could be used to help guide cable 10 to a cable storage device. These could be used to help maintain fleet angle and deliver cable 10 to loading arm 70 under the proper conditions required to maintain cable properties.

Cable 10 is then directed to cable highway 27 from loading arm 70, which in this case runs below carousels 60 toward an end of vessel 12. Cable is then redirected above deck 13 using vertical bend 72, which is able to guide cable 10 to an above deck position through either portside guide 29 or starboard side guide 31 of cable highway 28. Cable 10 is then delivered to the desired entrance side of inline quadrant 28 above deck, and finally to the desired tensioner.

Vertical bend 72 can pivot between portside and starboard side of the vessel to guide cable 10 to one of guides 29, 31 while maintaining requirements for cable integrity. In other embodiments, vertical bend could be similar to one of the smart spooling system 30 embodiments shown in Figs. 3a-7, and could be able to move laterally and/or tilt to ensure proper delivery to the desired side of cable highway 27 through a desired guide 29, 31.

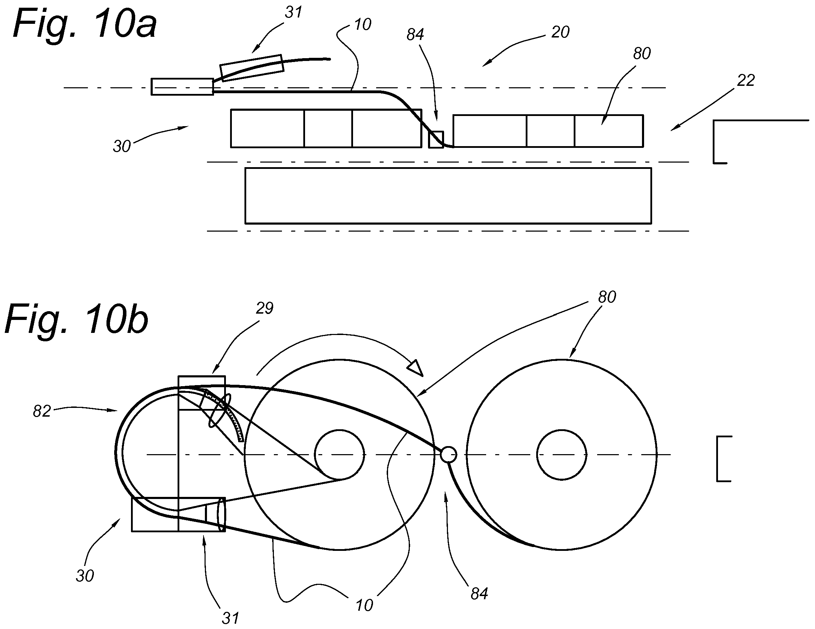

Fig. 10a shows a schematic side view of a cable laying system 20 with a cable storage system 22 that consists of below deck turntables 80 with a horizontal reversing system. Fig. 10b shows a schematic top view of the embodiment of the cable laying system of Fig. 10a. Cable storage system 22 includes two turntables 80, but could include more or fewer turntables or other cable storage devices in other embodiments. Figs. 10a-10b include cable highway 27 with guides 29, 31 and smart spooling system 30 with horizontal bend 82 and drive 84.

Cable laying system 20 works in much the same way as that shown in Figs. 8a-8b, with the exception that turntables 80 release cable from the side using drive 84. Drive 84 is also able to move in a vertical manner, allowing for maintaining proper fleet angle by allowing for the drive 84 to follow cable as it comes off turntable 80. This vertical movement can be on a track, a lift or in another manner. Cable is then directed above turntables 80 toward horizontal bend 82, which redirects cable 10 toward one of cable highway 27 guides 29, 31 to a desired entrance side of inline quadrant 28 above deck 13.

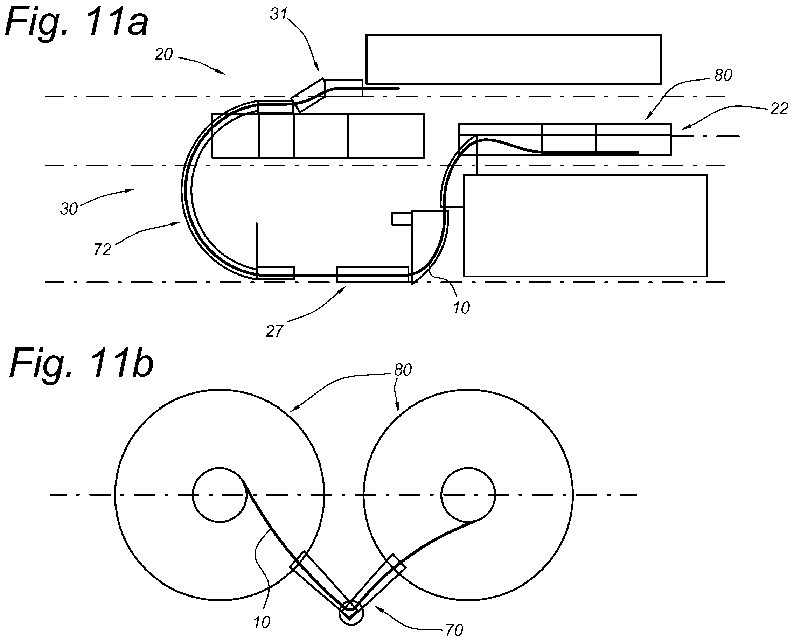

Fig. 11a shows a schematic side view of a cable laying system 20 with a cable storage system 22 that consists of turntables 80 with a vertical reversing system. Fig. 11b shows a top view of the system of Fig. 11a. Figs. 11a-11b include turntables 80 and smart spooling system 30 with loading arm 70 and vertical bend 72. The embodiment shown in Figs. 11a-11b operates in a similar manner to that shown in Figs. 9a-9b, with the additional function that loading arm 70 is able to move in a vertical direction to maintain a proper fleet angle for cable 10 coming off turntables 80.

Figs. 8a-11b show alternative embodiments for cable storage system 22 and smart spooling systems 30 which enable use of such an alternative cable storage systems 22. Using carousels 70 and/or turntables 80 can allow for flexible storage solutions for cable 10 and in some cases for the storage of more cable than reels 24 may be able to handle. The different embodiments of cable laying system 20 and smart spooling system 30 allow for proper unwinding from carousels 70 and/or turntables 80 below deck 13 and delivery above deck through either portside guide 29 or starboard side guide 31 of cable highway 27 to a desired entrance side of inline quadrant 28 while maintaining proper rope characteristics, such as fleet angle and bending radius restrictions.

In summary, cable laying system 20 enables laying cable from either side of a vessel with a flexible cable storage system 22 by using a smart spooling system 30 to guide cable 10 from a below-deck storage area to a cable highway 27 which delivers the cable 10 to a desired entrance of an inline quadrant 28. Smart spooling system 30 is able to guide cable 10 from a variety of different cable storage devices below deck 13 to either a portside entrance or starboard side entrance of an above deck inline quadrant 28 while accommodating for cable restrictions (bending radius restriction, fleet angle, etc.). Smart spooling system 30 can take a variety of forms depending on whether reels 24, carousels 70, turntables 80 and/or other cable storage devices are used for cable storage, but is able to control the fleet angle and deliver cable to cable highway 27 in a position leading to a desired entrance of inline quadrant 28. Smart spooling system 30 in some embodiments can include horizontal and/or vertical bends which may be able to move and/or tilt for accommodating cable extending from various specific cable storage systems 22 and specific cable requirements.

In some embodiments, smart spooling system 30 includes a lower bend 32 which is able to tilt and/or move laterally and a guide 36 used to bring cable 10 from below deck 13 to a desired portside or starboard side guide 29, 31 of cable highway 27 leading to a desired position above deck 13. Movement laterally of lower bend 32 enables accommodating the fleet angle and tilting allows lower bend 32 to properly align with guide 36. Guide 36 can take a number of different forms for guiding the cable 10 to a desired side of cable highway 27 leading to portside or starboard side entrance to inline quadrant 28. Other embodiments use one or more drives, arms and/or guides for properly driving and/or guiding cable to a desired entrance of inline quadrant 28 above deck 13.

By using cable highway 27 with a portside guide 29 and starboard side guide 31 which enables feeding of cable 10 to inline quadrant 28 from either a portside entrance or starboardside entrance, vessel 12 is able to lay cable from either portside or starboard side. This enables vessel 12 to have more flexibility in starting and/or continuing operations in an effective manner while minimizing risk by being able to adjust operations according to varying sea states or conditions. This also gives vessel 12 more flexibility for approaching a structure, enabling approach from either side of vessel 12 and arrangement at an optimal location for performance and risk minimization based on current sea conditions.

While the various embodiments have shown cable storage system 22 to consist of reels 24, carousels 70 and turntables 80, other cable storage devices and/or combinations could be used. Additionally, the number, set-up and location of cable storage devices is for example purposes only, and can be changed depending on system requirements. The arrangement of smart spooling system 30 and different components are also for example purposes, and could be changed in order to accommodate the guiding and driving of cable from a cable storage area 22 to a desired entrance side of an inline quadrant 28. The drives and movement systems are also shown for example purposes only, and other types of systems to enable driving and/or movement could be used.

While the invention has been shown and described in relation to cables, it can be used with any flexible product, including but not limited to pipes, umbilicals, ropes, lines, wires, etc. Similarly, while the storage area is referred to and described as a cable storage area and the highway is referred to as a cable highway, these are for example purposes only, and they could be a storage area/highway for any flexible product used.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A system for laying a flexible product from a storage area below a deck of a vessel, the system comprising:
an inline quadrant (28) above the deck for guiding flexible product to a portside or starboard side of the vessel, the inline quadrant being provided with a portside entrance and a starboard side entrance;
a highway (27) with a highway portside guide (29) and a highway starboard side guide (31) for guiding the flexible product from a below deck position to an above deck position on either the portside or the starboard side, the highway (27) extending to the portside entrance and the starboard side entrance of the inline quadrant; and
**characterized by**:
a smart spooling system (30) to guide flexible product between the storage area and to either the portside guide (29) or the starboard side guide (31) of the highway,
wherein the smart spooling system (30) comprises:
a loading arm (70) for receiving the flexible product from the storage system and directing it to the highway running below the storage system; and
a vertical bend (72) for directing the flexible product from the highway running below the storage system to either the portside guide or the starboard side guide of the highway.

2. The system of claim 1, wherein the loading arm (70) is movable in a vertical direction and/or pivotable.

3. The system of any of the preceding claims, wherein the storage system comprises at least one turntable (80) or carousel (60).

4. The system of any of the preceding claims, and further comprising:
a portside tensioner (26) on the vessel; and
a starboardside tensioner (26) on the vessel, wherein the inline quadrant (28) guides the flexible product to either the portside tensioner or the starboard side tensioner.

5. A method for laying flexible product from a vessel with a deck and a storage device below the deck using the system of any of the preceding claims, the method comprising:
a) aligning a smart spooling system (30) with the storage device and/or based on a desired feed side of an inline quadrant (28) on the deck; and
b) extending a flexible product from the storage device through the smart spooling system (30) through a guide (29, 31) to a desired entrance of the inline quadrant on the deck,
wherein step a) comprises moving a loading arm (70) to align with the storage device and/or based on a desired feed side of a highway (27) leading to an inline quadrant (28) on the deck.

6. The method of claim 5, wherein step b) comprises extending a flexible product from a carousel (60) and/or a turntable (80) through the smart spooling system (30) through a guide to a desired entrance of the inline quadrant (28) on the deck.

## Patentansprüche

1. System zum Auslegen eines flexiblen Produktes aus einem Lagerbereich unter einem Deck eines Wasserfahrzeugs, wobei das System Folgendes aufweist:
einen Inline-Quadrant (28) über dem Deck zum Leiten des flexiblen Produktes zu einer Backbordseite oder Steuerbordseite des Wasserfahrzeugs, wobei der Inline-Quadrant mit einem Backbordseiteneingang und einem Steuerbordseiteneingang versehen ist;
einen Laufweg (27) mit einer Backbord-Laufwegführung (29) und einer Steuerbord-Laufwegführung (31) zum Leiten des flexiblen Produktes von einer Position unter Deck zu einer Position über Deck auf entweder der Backbordseite oder der Steuerbordseite, wobei der Laufweg (27) sich zu dem Backbordseiteneingang und dem Steuerbordseiteneingang des Inline-Quadrant erstreckt, und **gekennzeichnet durch**
ein intelligentes Wickelsystem (30) zum Leiten des flexiblen Produktes zwischen dem Lagerbereich und entweder der Backbordseitenführung (29) oder der Steuerbordseitenführung (31) des Laufweges, wobei das intelligente Wickelsystem (30) Folgendes aufweist:
einen Ladearm (70) zum Aufnehmen des flexiblen Produktes aus dem Lagersystem und zum Leiten desselben zum Laufweg, der unter dem Lagersystem verläuft; und
einen vertikalen Krümmer (72) zum Leiten des flexiblen Produktes von dem Laufweg, der unter dem Lagersystem verläuft, zu entweder der Backbordseitenführung oder der Steuerbordseitenführung des Laufweges.

2. System nach Anspruch 1, wobei der Ladearm (70) in einer vertikalen Richtung bewegbar ist und/oder schwenkbar ist.

3. System nach einem der vorhergehenden Ansprüche, wobei das Lagersystem zumindest einen Drehtisch (80) oder ein Karussell (60) aufweist.

4. System nach irgendeinem der vorhergehenden Ansprüche, welches weiter Folgendes aufweist:
einen Backbordseitenspanner (26) an dem Wasserfahrzeug; und
einen Steuerbordseitenspanner (26) an dem Wasserfahrzeug, wobei der Inline-Quadrant (28) das flexible Produkt zu entweder dem Backbordseitenspanner oder dem Steuerbordseitenspanner leitet.

5. Verfahren zum Auslegen eines flexiblen Produktes von einem Wasserfahrzeug mit einem Deck und einer Lagervorrichtung unter dem Deck, welches das System nach einem der vorhergehenden Ansprüche verwendet, wobei das Verfahren Folgendes aufweist:
a) Ausrichten eines intelligenten Wickelsystems (30) mit der Lagervorrichtung und/oder basierend auf einer erwünschten Einspeisungsseite eines Inline-Quadrant (28) auf dem Deck; und
b) Ausbreiten bzw. Leiten eines flexiblen Produktes von der Lagervorrichtung durch das intelligente Wickelsystem (30) durch eine Führung (29, 31) zu einem erwünschten Eingang des Inline-Quadrant auf dem Deck,
wobei der Schritt a) aufweist, einen Ladearm (70) zur Ausrichtung mit der Lagervorrichtung zu bewegen und/oder basierend auf einer Einspeisungsseite eines Laufwegs (27) zu bewegen, der zu einem Inline-Quadrant (28) auf dem Deck führt.

6. Verfahren nach Anspruch 5, wobei der Schritt b) aufweist, ein flexibles Produkt von einem Karussell (60) und/oder einem Drehtisch (80) durch das intelligente Wickelsystem (30) durch eine Führung zu einem erwünschten Eingang des Inline-Quadrant (28) auf dem Deck zu leiten bzw. auszubreiten.

## Revendications

1. Un système de pose d'un produit flexible depuis une zone de stockage sous un pont d'un navire, le système comprenant :
- un quadrant en ligne (28) au-dessus du pont pour guider le produit flexible vers un côté bâbord ou un côté tribord du navire, le quadrant en ligne étant pourvu d'une entrée bâbord et d'une entrée tribord ;
- un chemin (27) comprenant un passage de guidage du côté bâbord (29) et un passage de guidage du côté tribord (31) pour guider le produit flexible depuis leur disposition sur le pont inférieur à une disposition sur le pont supérieur soit du côté bâbord soit du côté tribord, le chemin (27) s'étendant soit jusqu'à l'entrée bâbord soit jusqu'à l'entrée tribord du quadrant en ligne ; et **caractérisé par** :
- un système de bobinage intelligents (30) pour guider un produit flexible depuis la zone de stockage vers soit le guide bâbord (29) soit le guide tribord (31) du chemin,
lequel système de bobinage intelligent (30) comprend :
- un bras de chargement (70) pour recevoir le produit flexible provenant du système de stockage et les diriger vers le chemin passant sous le système de stockage ; et
- un chemin vertical courbe (72) pour diriger le produit flexible du chemin passant sous le système de stockage soit vers le passage de guidage tribord soit vers le passage de guidage bâbord du chemin.

2. Le système selon la revendication 1, dans lequel le bras de chargement (70) est déplaçable selon une direction verticale et/ou est pivotable.

3. Le système selon l'une quelconque des revendications précédentes, dans lequel le système de stockage comprend au moins un plateau tournant (80) ou carrousel (60).

4. Le système selon l'une quelconque des revendications précédentes, et comprenant, en outre :
- un tendeur bâbord (26) sur le navire ; et
- un tendeur tribord (26) sur le navire, dans lequel le quadrant en ligne (28) guide le produit flexible soit vers le tendeur bâbord, soit vers le tendeur tribord.

5. Un procédé de pose d'un produit flexible depuis un navire avec un pont et une zone de stockage sous le pont utilisant le système de l'une quelconque des revendications précédentes, le procédé comprenant :
a) l'alignement d'un système de bobinage intelligents (30) avec le dispositif de stockage et/ou basé sur un côté d'alimentation souhaité d'un quadrant en ligne (28) sur le pont ; et
b) l'amenée un produit flexible depuis la zone de stockage à travers le système de bobinage intelligent (30) par un système de guidage (29, 31) vers une entrée souhaitée du quadrant en ligne sur le pont,
dans lequel l'étape a) comprend le déplacement d'un bras de chargement (70) pour s'aligner avec le dispositif de stockage et/ou basé sur un côté d'alimentation souhaité d'un chemin (27) menant à un quadrant en ligne (28) sur le pont.

6. Le procédé selon la revendication 5, dans lequel l'étape b) comprend l'amenée d'un produit flexible depuis un carrousel (60) et/ou une table tournante (80) grâce au système de bobinage intelligent (30) par un guide vers une entrée souhaitée du quadrant en ligne (28) sur le pont.
